# EUROPÄISCHE PATENTSCHRIFT

(11) **EP 0 338 109 B1**
(45) Veröffentlichungstag und Bekanntmachung des Hinweises auf die Patenterteilung: **23.03.1994**
(21) Anmeldenummer: 88106325.9
(22) Anmeldetag: 20.04.1988
(51) Int. Cl.: H05B 41/29

(54) **Vorschaltgerät für eine Entladungslampe**
Converter for a discharge lamp
Convertisseur pour lampe à décharge

(43) Veröffentlichungstag der Anmeldung: 25.10.1989
(73) Patentinhaber: Zumtobel Aktiengesellschaft, A-6850 Dornbirn (AT)
(72) Erfinder: Jagschitz, Otto, Dipl.-Ing., A-6840 Götzis (AT)
(74) Vertreter: Schmidt-Evers, Jürgen, Dipl.-Ing.

(56) Entgegenhaltungen:
- EP-A- 0 178 852
- WO-A-82/01276
- DE-A- 3 432 266

## Beschreibung

Die Erfindung betrifft ein Vorschaltgerät für eine Entladungslampe, die parallel zum Kondensator eines Reihenresonanzkreises im Lastkreis eines Wechselrichters angeordnet ist, der mit einer Gleichspannungsquelle verbunden und von einem Frequenzgenerator gesteuert ist, dessen Frequenz durch ein Steuerteil zwischen einer nächst der Resonanzfrequenz des Reihenresonanzkreises gelegenen Betriebsfrequenz und einer über letzterer liegenden Leerlauffrequenz veränderbar ist.

Nach der DE-PS 30 14 419 ist es bekannt, den Lampenstrom zu messen. Wenn er zu hoch ist, wird eine bistabile Schalteinrichtung betätigt, die den Transformator des Wechselrichters kurzschließt.

Nach der DE-PS 31 52 951 ist es bekannt, daß mit dem Einschalten des Vorschaltgerätes eine monostabile Kippstufe in den instabilen Zustand gekippt wird, in dem sie eine zusätzliche Wicklung im Transformator des Wechselrichters kurzschließt, so daß dieser mit einer hohen Frequenz arbeitet. Bei dieser hohen Frequenz liegt an der Lampe eine verringerte Spannung an, bei der eine Zündung nicht erfolgen kann. Bis zum Rückkippen der monostabilen Kippstufe in den stabilen Kippzustande können sich jedoch die Heizwendeln der Lampe erhitzen und emittieren. Nach dem Rückkippen der Kippstufe wird der Kuzrschluß der zusätzlichen Wicklung wieder aufgehoben, wodurch der Wechselrichter mit einer niedrigeren Frequenz arbeitet, die in der Nähe der Resonanzfrequenz eines Reihenresonanzkreises liegt. Die Lampe ist parallel zum Kondensator des Reihenresonanzkreises geschaltet. Bei der niedrigeren Frequenz entsteht über dem Kondensator und der Lampe infolge der Resonanz eine erhöhte Spannung, die zur Zündung ausreicht.

Nach der DE-OS 32 08 607 ist es bekannt, zur Ansteuerung des Wechselrichters zwei Frequenzgeneratoren vorzusehen, von denen einer etwa die Betriebsfrequenz erzeugt und der zweite eine darüberliegende Leerlauffrequenz. Anstelle von zwei Generatoren kann auch ein durchstimmbarer Generator vorgesehen werden. Zunächst wird die hohe Leerlauffrequenz eingeschaltet, bei der noch keine Zündung erfolgen kann. Dabei werden die Lampenelektroden vorgeheizt. Wegen des großen positiven Temperaturkoeffizienten des Elektrodenwiderstandes kann durch entsprechende Wahl der Ansprechschwelle eines Schwellwertschalters erkannt werden, ob die Elektroden bereits ausreichend vorgeheizt sind. Ist dies der Fall, so spricht der Schwellwertschalter an und es wird der Generator mit der niedrigeren Frequenz eingeschaltet oder - wenn ein durchstimmbarer Generator vorgesehen ist - wird die Frequenz in Richtung auf die Betriebsfrequenz abgesenkt, so daß die Zündung erfolgen kann.

Nach der WO-A 82/01276 ist ein Vorschaltgerät bekannt, welches einen Überstrom-Detektor für die Tyristoren des Wechselrichters aufweist, der dann ansprechen soll, wenn beide Tyristoren gleichzeitig leitend sind. In diesem Fall werden die Tyristoren abgeschaltet.

Weiterhin ist es nach der DE-A 3,432,266 bekannt, mit der Drossel der Lampe eine Meßwicklung zu koppeln, aus der ein den Zündzustand anzeigendes Signal abgeleitet und einer Überwachungsschaltung zugeführt wird. Die Überwachungsschaltung stellt aus dem Signal fest, ob der die Drossel enthaltende Reihenresonanzkreis bei der Zündfrequenz ohne merkbare Dämpfung durch die Lampe schwingt, was bei einer nicht gezündeten Lampe der Fall ist, oder ob der Reihenresonanzkreis bei brennender Lampe gedämpft ist. Die entsprechende Meldung der Überwachungsschaltung wird von einer Ablaufsteuerung für einen den Wechselrichtung antreiben Oszillator abgefragt. Die Ablaufsteuerung steuert den Oszillator so, daß dieser nacheinander jeweils eine bestimmte Zeitlang zunächst bei einer hohen Startfrequenz, dann bei einer erniedrigten Heizfrequenz, dann bei der weiter erniedrigten Resonanzfrequenz des Reihenresonanzkreises und schließlich bei der noch niedrigeren Betriebsfrequenz schwingt. Wenn das Abfragen der Überwachungsschaltung bei der Zündfrequenz ergibt, daß die Lampe nicht gezündet hat, so stellt die Ablaufsteuerschaltung den Oszillator wieder auf die Startfrequenz zurück, und der Vorgang wird wiederholt.

Der Erfindung liegt die Aufgabe zugrunde, ein Vorschaltgerät zu schaffen, dessen Betriebssicherheit durch die Überwachung und Auswertung verschiedener Parameter erhöht ist, wobei sich die Forderung nach erhöhter Betriebssicherheit insbesondere aus einer Realisierung der meisten Bauelemente im Rahmen eines integrierten Halbleiter-Chips ergibt.

Die Aufgabe ist durch die kennzeichnenden Merkmale der Ansprüche gelöst, wobei sich die Kombination der Ansprüche als besonders vorteilhafte Lösung der Aufgabenstellung auszeichnet.

Es zeigen:
- Fig. 1: ein Blockschaltbild des Vorschaltgerätes und
- Fig. 2: den zeitlichen Verlauf der Treiberspannung für den Wechselrichter im Vergleich mit dem Gesamtstrom der Lampe.

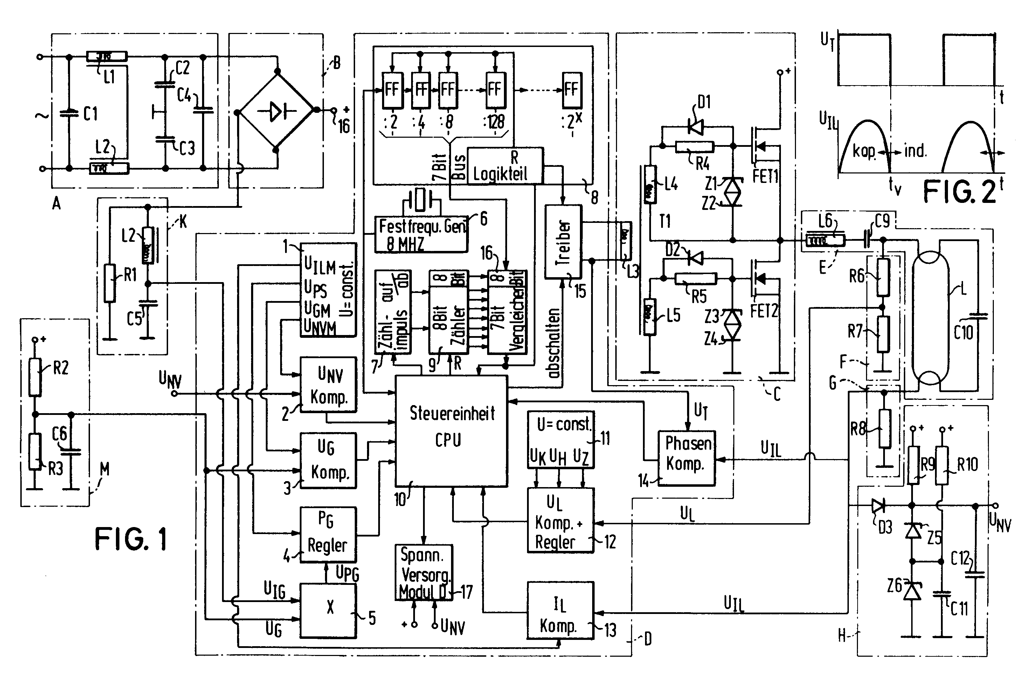

Das in Figur 1 dargestellte Blockschaltgerät besteht aus mehreren Modulen, die nacheinander erläutert werden sollen.

Modul A ist an das Wechselstromnetz angeschlossen und dient als HF-Oberwellenfilter zur Reduzierung der harmonischen Oberwellen der Netzfrequenz sowie zur Funkentstörung. Es ist in üblicher Weise aufgebaut und enthält die Drosseln L1 und L2 sowie die Kondensatoren C1, C2, C3 und C4.

An das Modul A schließt sich das Modul B an. Dieses besteht aus einer nur schematisch angedeuteten Gleichrichterbrücke mit Glättungsschaltung. Am Anschluß 16 des Moduls B steht eine +Gleichspannung von ca. 250V zur Verfügung.

Mit dem Modul B ist ein Modul K verbunden, der zur Erzeugung einer dem dem Modul B entnommenen Gleichstromm entsprechenden Spannung U_{EG} dient. Der Modul K besteht aus einem Widerstand R1, dem eine Serienschaltung aus einer Drossel L2 und einem Kondensator C5 parallel geschaltet ist. Von dem Verbindungspunkt zwischen L2 und C5 kann die Spannung U_{IG} abgenommen werden.

Ein weiterer Modul M dient zur Erzeugung einer der von dem Modul B erzeugten Gleichspannung entsprechenden Ist-Wertspannung U_{G}. Der Modul M ist mit dem Anschluß 16 des Moduls B verbunden und besteht aus einem Widerstands-Spannungsteiler R2/R3, wobei dem Widerstand R3 ein Kondensator C6 parallel geschaltet ist. Die dem Spannungsteilerpunkt entnehmbare Spannung U_{G} ist der von dem Modul B am Anschlußpunkt 16 abgegebenen Gleichspannung proportional, jedoch niedriger als diese.

Der Modul C ist ein Wechselrichter, der aus der vom Modul B erzeugten Gleichspannung eine variable Wechselspannung erzeugt. Dazu wird dem Modul C von dem später noch erläuterten Modul E an die Wicklung L3 eines Gegentakttransformators T1 eine Wechselspannung zugeführt. Der Gegentakttransformator T1 weist sekundärseitig zwei Wicklungen L4 und L5 auf. Die an der Wicklung L4 entstehende Spannung wird dem gate-Anschluß eines Feldeffekttransistors FET1 über einen Widerstand R4 zugeführt, dem eine Diode D1 parallel geschaltet ist. Zwischen dem gate-Anschluß und dem source-Anschluß des FET1 sind zwei in Serie aber gegensinnig geschaltete Zenerdioden Z1 und Z2 geschaltet. Die an der Wicklung L5 des Gegentakttransformators T1 entstehende Spannung wird dem gate-Anschluß eines Feldeffekttransistors FET2 über einen Widerstand R5 zugeführt, dem eine Diode D2 parallel geschaltet ist. Zwischen den gate-Anschluß des FET2 und den source-Anschluß sind zwei in Serie aber gegensinnig geschaltete Zenerdioden Z3 und Z4 geschaltet. Die Widerstände R4 und R5 sind hochohmig und dienen zur Einschaltverzögerung der FET's. Die Dioden D1 und D2 sollen ein schnelles Abschalten der FET's gewährleisten. Auf diese Weise soll erreicht werden, daß die beiden FET's nie gleichzeitig vollständig leitend sind, da dies einen Kurzschluß zur Folge hätte. Die Zenerdioden Z1, Z2, Z3 und Z4 sollen die gate-Anschlüsse der FET's gegenüber Spannungen schützen. Ansonsten ist der Wechselrichter gemäß Modul C üblicher Bauart und seine Funktion bekannt, so daß hier auf eine weitere Erläuterung verzichtet werden kann.

An den Ausgang des den Wechselrichter bildenden Moduls C schließt sich ein eine Gasentladungslampe L enthaltender Lastkreis an, der als Modul E dargestellt ist. Dieser enthält neben der Gasentladungslampe L einen von einer Drossel L6 und einem Kondensator C10 gebildeten Serienresonanzkreis. Der Kondensator C9 dient zur Entkopplung. Der Schwingkreiskondensator C10 liegt parallel zur Gasentladungslampe L. Die Verwendung des Serienresonanzkreises hat mehrere bekannte Vorteile. Vor dem Zünden der Gasentladungslampe L fließt der Wechselstrom durch die Heizwendeln der Lampe über den Parallelkondensator C10. Dadurch werden die Heizwendeln geheizt und zur Emission angeregt. Wenn die Frequenz der von dem Modul C dem Modul E zugeführten Spannung in der Nähe der Resonanzfrequenz des Reihenresonanzkreises L6/C10 liegt, so tritt an den Parallelkondensator C10 eine Spannungsüberhöhung auf, die zur Zündung der Lampe L ausgenutzt wird. Nach dem Zünden dämpft die Lampe L die Güte des Serienresonanzkreises und die Spannung über der Lampe L sinkt ab, da die Lampe L dann leitend ist. Nun wirkt die Drossel L6 als Lampenstrombegrenzer. Um die Lebensdauer der Lampe L zu erhöhen, ist man bestrebt, die Heizwendeln der Lampe L vor dem Zünden genügend lange vorzuheizen. Um dies zu erreichen, wird dem Modul E zunächst eine Spannung mit einer Frequenz zugeführt, die soweit über der Resonanzfrequenz des Serienresonanzkreises L6/C10 liegt, daß sich die Heizwendeln der Lampe L zwar erhitzen, eine Zündung der Lampe L jedoch noch nicht erfolgt, weil die an den Parallelkondensator C10 abfallende Spannung wegen ihrer hohen Frequenz zu niedrig ist. Dann senkt man die Frequenz in Richtung auf die Resonanzfrequenz des Serienresonanzkreises L6/C10 ab, bis die erwähnte Spannungsüberhöhung an dem Parallelkondensator C10 auftritt und eine Zündung erfolgen kann.

Wie die erwähnte Änderung der Frequenz der dem Modul E zugeführten Spannung bewirkt wird, wird später noch erläutert.

Ein Modul G dient zur Erzeugung einer Spannung U_{IL}, die ein Maß für den Gesamtstrom der Lampe L ist. Der Modul G besteht aus einem mit der einen Elektrode der Lampe verbundenen Widerstand R8, über den der Gesamtlampenstrom fließt.

Ein Modul H dient zur Erzeugung einer niedrigen Versorgungsgleichspannung U_{NV} von etwa 10....12V für die Bauelemente des vorzugsweise als Halbleiter-Chip ausgebildeten Moduls D, der später noch erläutert wird. Der Modul H ist dazu mit dem Ausgang des Moduls G verbunden, der, wie erwähnt, eine Spannung U_{IL} erzeugt, welche dem Gesamtlampenstrom entspricht. Diese Spannung ist also aus dem Gesamtlampenstrom abgeleitet. Sie wird dem Modul H einer Diode D3 zugeführt, die die Spannung U_{IL}, welche eine Wechselspannung ist, gleichrichtet. Der Widerstand R9 und die beiden mit ihm in Serie geschalteten Zenerdioden Z5 und Z6 sorgen für eine Spannungstabilisierung. Der Widerstand R10 und der mit ihm in Serie geschaltete Kondensator C11 sowie der Kondensator C12 sorgen für eine Glättung der gleichgerichteten Spannung U_{NV}. Die Spannung U_{NV} könnte zwar auch durch Spannungsteilung aus der am Anschluß 16 des Moduls B zur Verfügung stehenden Gleichspannung (250V) gewonnen werden; dann aber müßte der der Spannungsdifferenz zwischen 250V und 10....12V entsprechende Betrag vernichtet werden, was mit einer entsprechend unerwünschten Verlustwärme und einem unnötigen Energieverbrauch verbunden wäre.

Kernstück des Vorschaltgerätes ist der Modul D. Dieser dient im wesentlichen dazu, eine variable Frequenz für den den Wechselrichter bildenden Modul C zu erzeugen, und zwar in Abhängigkeit von mehreren Parametern des Vorschaltgerätes. Mit der variablen Frequenz ist es möglich, die Spannung an den Anschlüssen der Lampe L (Modul E) zu verändern. Bei einer Leerlauffrequenz, die wesentlich höher als die Resonanzfrequenz des Reihenresonanzkreises L6/C10 ist, ist der den Lastkreis bildende Modul E induktiv, und die Spannung an den Anschlüssen der Lampe L beträgt effektiv nicht mehr als 250V. Diese relativ geringe Spannung ist durch einschlägige Normen (beispielsweise deutsche VDE 0712) vorgeschrieben, um ein relativ gefahrloses Auswechseln der Lampe L zu ermöglichen. Bei der in der Nähe der Resonanzfrequenz des Reihenresonanzkreises L6/C10 liegenden Zünd-bzw. Betriebsfrequenz beträgt die den Anschlüssen der Lampe L zugeführte Wechselspannung dagegen ca. 500V.

Der Modul D enthält einen quarzbestückten Festfrequenzgenerator 6, der z.B. eine Frequenz von 8MHz erzeugt. Diese Frequenz wird einer Frequenzsteuereinheit 10 zugeführt, welche beispielsweise einen entsprechend programmieren Mikroprozessor (CPU) enthalten kann. Die Frequenzsteuereinheit führt die von dem Festfrequenzgenerator 6 abgegebene Frequenz von 8MHz einem Block 7 zu, welcher einem 8-Bit-Zähler 9 entsprechende Zählimpulse (clock) zuführt und den 8-Bit-Zähler 9 gleichzeitig veranlaßt, aufwärts oder abwärts (up/down) zu zählen. Letzteres in Abhängigkeit vom Stand der der Frequenzsteuereinheit 10 zugeführten Parameter des Vorschaltgerätes. Der Zählerstand des 8-Bit-Zählers 9 wird einem 7-Bit-Vergleicher 16 zugeführt. Letzterer ist außerdem über eine 7-Bit-Busleitung mit einer von in Serie geschalteten Flip-Flops FF einer Zählerlogik 8 verbunden. Der Flip-Flop-Kette wird die 8MHz-Frequenz des Festfrequenzgenerators 6 zum Zählen zugeführt, wobei jedes Flip-Flop FF der Kette die Frequenz um den Faktor 2 herunterteilt. Wenn der Stand der Flip-Flop-Kette mit dem Zählerstand des 8-Bit-Zählers 9 gleich ist, so setzt der mit dem 7-Bit-Vergleicher 16 verbundene Logikteil der Zählerlogik 8 die Flip-Flop-Kette über die Leitung R zurück. Gleichzeitig gibt der Logikteil der Zählerlogik 8 die entsprechend heruntergeteilte Frequenz an eine Treiberschaltung 15 ab, deren Ausgangs mit der Wicklung L3 des Gegentakttransformators T1 des den Wechselrichter bildenden Moduls C verbunden ist.

Die den programmierten Mikroprozessor enthaltende Steuereinheit 10 (CPU) verarbeitet die ihr zugeführten Signale, die den einzelnen gemessenen Parametern entsprechen, parallel und/oder in Serie. Der Mikroprozessor ist so programmiert, daß er ein bestimmtes Programm zur Verarbeitung dieser Signale abarbeitet. Dies soll nachfolgend hinsichtlich der Wirkungsweise beschrieben werden.

Ein erster Parameter ist die von dem Block F erzeugte Lampenspannung U_{L}, die eine Wechselspannung ist. Diese wird dem einen Eingang eines Komparators bzw. Reglers 12 zugeführt. Der Komparator bzw. Regler 12 ist außerdem mit einem Sollwert-Geber 11 verbunden, der ihm drei Sollwert-Spannungen U_{K}, U_{H} und U_{Z} zuführt. Bei diesen drei Sollwert-Spannungen handelt es sich um Gleichspannungen. Der Komparator bzw. Regler 12 vergleicht jeweils den Scheitelwert der Lampen-Wechselspannung U_{L} mit der betreffenden Sollwert-Spannung.

Nach dem Einschalten des Vorschaltgerätes steigt die Lampenspannung U_{L} in der Regel an. Lediglich, wenn in der Schaltung ein Kurzschluß ist, bleibt sie unterhalb der Sollwert-Kurzschlußspannung U_{K}. Die Steuereinheit 10 prüft nun eine bestimmte Zeit lang, beispielsweise über eine Periode der Netz-Wechselspannung, ob die Lampenspannung U_{L} unterhalb der Sollwert-Kurzschlußspannung U_{K} bleibt. Wenn dies der Fall ist, so schaltet die Steuereinheit 10 den Treiber 15 ab. Ferner schaltet die Steuereinheit 10 den gesamten Modul D in den hochohmigen Zustand. Das bedeutet, daß die Blöcke und Bauelemente des Moduls D zwar in Betriebsbereitschaft sind, jedoch nur eine sehr geringe Leistung aufnehmen. Da durch das Abschalten des Treibers 15 dem Modul E und damit auch den Modulen G und H keine Wechselspannung mehr zugeführt wird, werden die Blöcke und Bauelemente des Moduls D vom Modul B mit Spannung versorgt. Wie bereits früher erwähnt, steht am Anschluß 16 des Moduls B zwar nur eine hohe Gleichspannung zur Verfügung; die durch die Spannungsdifferenz zur Versorgungsspannung der Bauelemente bzw. Blöcke des als Halbleiter-Chip ausgebildeten Moduls D anfallende Verlustleistung ist jedoch gering, weil auch die Leistungsaufnahme des Moduls D infolge des hochohmigen Zustandes gering ist. Wenn der Modul D wieder vom hochohmigen in den Betriebszustand umgeschaltet wird, so erfolgt die Spannungsversorgung durch die am Ausgang des Moduls H zur Verfügung stehende niedrige Gleichspannung U_{NV}. Die Umschaltung zwischen den beiden Möglichkeiten der Spannungsversorgung erfolgt durch die Steuereinheit 10 am Block 17 für die Spannungsversorgung des Moduls D.

Da unmittelbar nach dem Zünden der Lampe L die Lampenspannung U_{L} stark absinkt, und zwar unter die Kurzschluß-Sollwertspannung U_{K}, ist es erforderlich, die Prüfung der Lampenspannung U_{L} durch den Komparator bzw. Regler 12 unmittelbar nach dem Starten (Zünden) der Lampe L zu unterbrechen. Die Unterbrechung ist im Programm des Mikroprozessors der Steuereinheit 10 einprogrammiert.

Das Ausschalten des Treibers 15 sowie das Setzen des Moduls D in den hochohmigen Zustand durch einen detektierten Kurzschluß kann nur durch Abschalten und Wiedereinschalten der Netzwechselspannung behoben werden. Wenn in der Schaltung kein Kurzschluß vorhanden ist, so überschreitet die Lampenspannung U_{L} die Sollwert-Kurzschlußspannung U_{K} und steigt an, bis sie die Sollwert-Vorheizspannung U_{H} erreicht. Diese beträgt ca. 1,4V. Das entspricht etwa einer Spannung von 200V an den Anschlüssen der Lampe L. Wenn der Komparator bzw. Regler der Steuereinheit 10 meldet, daß die Lampenspannung U_{L} gleich der Sollwert-Vorheizspannung U_{H} ist, so regelt die Steuereinheit 10 die dem Modul C zugeführte Frequenz so, daß die Lampenspannung U_{L} eine bestimmte Vorheizzeit lang gleich der Sollwert-Vorheizspannung U_{H} bleibt. Während dieser Zeit erhitzen sich die Heizwendeln der Lampe L des Moduls E und beginnen zu emittieren. Die dem Modul C (Wechselrichter) zugeführte Leerlauffrequenz trägt in diesem Falle etwa 123kHz. Die Vorheizzeit ist im Programm des Mikroprozessors der Steuereinheit (CPU) enthalten.

Nach dem Ende der Vorheizzeit bewirkt die Steuereinheit den gemäß dem ihr eingegebenen Programm, daß die dem Modul C zugeführte Frequenz in Richtung auf die Betriebsfrequenz abgesenkt wird, die etwa 62kHz beträgt. Das Absenken der Frequenz des Wechselrichters (Modul C) hat ein Ansteigen der Wechselspannung an den Anschlüssen der Lampe L (Modul E) auf etwa 500V zur Folge. Durch Vergleich der Lampenspannung U_{L} mit der vom Sollwert-Geber 11 abgegebenen dritten Sollwert-Spannung, der Sollwert-Zündspannung U_{Z} in dem Regler 12 sorgt nun die Steuereinheit 10 unter Auswertung des Ausgangssignales des Reglers 12 dafür, daß die Lampenspannung U_{L} gleich der Sollwert-Zündspannung U_{Z} gehalten wird. Die Sollwert-Zündspannung U_{Z} beträgt ca. 3,5V. Die Lampe L müßte nunmehr zünden. Wenn eine Zündung erfolgt, so sinkt die Lampenspannung U_{L} stark ab. Dies wird von der Steuereinheit 10 über den Komparator bzw. den Regler 12 detektiert. Das Vorschaltgerät mit Lampe L befindet sich damit in Betrieb.

Wenn die Lampenspannung U_{L} über einen bestimmten Zeitraum nicht unter die Sollwert-Zündspannung U_{Z} absinkt, so bedeutet dies, daß keine Zündung erfolgt ist. Ursache für das Nichtzünden kann beispielsweise ein Gasdefekt der Lampe L sein oder es kann die Emissionsfähigkeit der Heizwendeln der Lampe L erschöpft sein. Startet die Lampe L aus diesen oder anderen Gründen trotz des Erreichens der Startspannung nicht, so besteht die Gefahr, daß die Schaltung gefährdet wird, wenn die relativ hohe Startspannung über längere Zeit aufrechterhalten wird. Aus diesem Grunde ist die Steuereinheit (CPU) 10 so programmiert, daß ein erfolgloser Starversuch nach einer bestimmten Zeit abgebrochen wird. Dies geschieht dadurch, daß die Steuereinheit 10 die dem Wechselrichter (Modul C) zugeführte Frequenz in Richtung auf die Leerlauffrequenz erhöht, mit der Folge, daß die an den Anschlüssen der Lampe L anstehende Spannung wieder absinkt. Die Steuereinheit 10 ist weiterhin so programmiert, daß sich an einen ersten erfolglosen Startversuch eine bestimmte Zahl weiterer gleichartiger Startversuche anschließen können. Erfolgt auch nach dieser bestimmten Zahl weiterer Startversuche keine Zündung der Lampe L, so wird die Frequenz für den Wechselrichter auf den höchstmöglichen Wert, d.h. die Leerlauffrequenz gesetzt und verbleibt dort entweder bis zum Austausch der Lampe L oder bis zum Aus- und Wiedereinschalten des Wechselstromnetzes.

Ein weiterer Parameter, der überwacht wird, ist der Lampenstrom. Dem Lampenstrom entspricht die Istwert-Spannung U_{IL}, die vom Modul G abgegeben wird. Diese wird einem Komparator 13 im Modul D zugeführt, der außerdem von einem Bezugsspannungsgeber 1 eine Bezugsspannung U_{ILM} erhält, die einem Mindestlampenstrom entspricht. Der Komparator 13 vergleicht die Spannung U_{IL} mit der Spannung U_{ILM} und meldet das Ergebnis der Steuereinheit 10. Wenn die dem Lampenstrom entsprechende Spannung U_{IL} die Bezugsspannung unterschreitet, so kann die Ursache dafür beispielsweise ein Heizwendelbruch der Lampe L sein oder die Tatsache, daß die Lampe L nicht richtig in ihren Fassungen sitzt oder entnommen ist. Für diesen Fall steuert die Steuereinheit 10 die dem Wechselrichter (Modul C) zugeführte Frequenz wieder auf den höchstmöglichen Wert, also auf die Leerlauffrequenz. Dadurch liegt an den Anschlüssen (Fassung) der Lampe L eine relativ niedrige und daher ungefährliche Spannung an, was insbesondere für den Fall wichtig ist, daß die Lampe L entnommen ist.

Ein weiterer überwachter Parameter ist die vom Modul H erzeugte niedrige Gleichspannung zur Versorgung der Blöcke und Elemente des Moduls D. Diese Spannung U_{NV} wird einem Komparator 2 zugeführt, dem außerdem vom Bezugsspannungsgeber 1 eine Bezugsspannung zugeführt wird, die gleich dem Mindestgleichspannungswert ist, der von dem Modul H erzeugt werden soll. Das Vergleichsergebnis des Komparators 2 wird wieder der Steuereinheit 10 zugeführt. Wenn die vom Modul H erzeugte niedrige Gleichspannung U_{NV} die Bezugsspannung U_{NVM} unterschreitet, so steuert die Steuereinheit 10 die Frequenz für den Wechselrichter wieder auf die Leerlauffrequenz und schaltet das Modul D in den hochohmigen Zustand.

Ein weiterer überwachter Parameter ist die vom Modul B erzeugte Gleichspannung. Eine dieser Gleichspannung entsprechende und herabgeteilte Spannung ist die Spannung U_{G} die dem Modul M entnommen werden kann. Sie wird einem Komparator 3 zugeführt. Dem Komparator 3 wird außerdem noch vom Bezugsspannungsgeber 1 eine Bezugsspannung U_{GM} zugeführt, die der Mindestgleichspannung entspricht. Das Vergleichsergebnis des Komparator 3 wird wiederum an die Steuereinheit 10 gemeldet. Wenn die Spannung U_{G} die Bezugsspannung U_{GM} unterschreitet, so bedeutet dies beispielsweise, daß die vom Modul B erzeugte Gleichspannung unter 150V gesunken ist. Bei dieser Gleichspannung kann der Wechselrichter nicht mehr die Energie zum Zünden der Lampe aufbringen. Startversuche hätten dann möglicherweise eine Vorschädigung der Lampe zur Folge. Die Steuereinheit prüft nun mindestens eine halbe Netzperiode lang, ob die vom Modul M abgegebene Gleichspannung U_{G} die Mindestgleichspannung U_{NVM} mindestens einmal unterschreitet. Wenn dies der Fall ist, so wird der Treiber 15 abgeschaltet. Das bedeutet, daß keine weiteren Startversuche unternommen werden.

Ein weiterer zu überwachender Parameter ist die Gleichstromleistung. Die Istwert-Gleichstromleistung wird durch Multiplikation der vom Modul M abgegebenen Gleichspannung U_{G} und der vom Modul K abgegebenen Gleichspannung U_{IG} ermittelt. Die letztgenannte Gleichspannung U_{IG} entspricht dem von der Schaltung aufgenommenen Gleichstrom. Eine vom dem Multiplizierer 5 erzeugte der Gleichstromleistung entsprechenden Spannung U_{PG} wird einem Regler 4 zugeführt. Dem Regler 4 wird außerdem eine der Sollwert-Leistung entsprechende Bezugsspannung U_{PS} zugeführt. Das Ausgangssignal des als Komparator arbeitenden Reglers 4 wird der Steuereinheit 10 zugeführt. Diese regelt nun die Frequenz für den Wechselrichter (Modul C) so, daß die aufgenommene Gleichstromleistung konstant bleibt. Auf diese Weise ist die Lichtleistung der Lampe L ebenfalls konstant. Es sei in diesem Zusammenhang noch erwähnt, daß die Möglichkeit vorgesehen werden kann, die Bezugsspannung U_{PS} am Bezugsspannungsgeber 1 von außen einstellbar zu machen, um Bauelementetoleranzen ausgleichen zu können und die von der Lampe L aufgenommene Leistung durch Trimmen eines (nicht dargestellten) Widerstandsteilers an diese Toleranzen anpassen zu können.

Wenn die Frequenzgeneratorschaltung von der Betriebsfrequenz zur Leerlauffrequenz hochgefahren werden soll, so muß nicht der gesamte Frequenzbereich kontinuierlich durchfahren werden, sondern dies kann dadurch erfolgen, daß die Steuereinheit 10 dem 8-Bit-Zähler 9 über die Leitung R einen Rücksetzimpuls übermittelt.

Ein letzter zu überwachender Parameter ist die Lastimpedanz für die Feldeffekttransistoren FET1 und FET2 des Wechselrichters (Modul C). Wenn die vom Modul B erzeugte Gleichspannung für den Wechselrichter sinkt, beispielsweise bei starken Einbrüchen der Netzwechselspannung oder - wenn die Versorgungsgleichspannung für den Wechselrichter aus einer Zentralbatterieanlage entnommen wird - bei einem Absinken von deren Spannung, so wird die Belastung der Feldeffekttransistoren infolge der zu der Lampe L parallel liegenden Parallelkapazität C10 kapazitiv. Eine kapazitive Belastung der Feldeffekttransistoren kann insbesondere mit dem vorstehend erwähnten Absinken der Versorgungsgleichspannung für den Wechselrichter dann auftreten, wenn die dem Wechselrichter zugeführte Steuerfrequenz sich ihrem unteren Grenzwert nähert. Bei kapazitiver Belastung besteht für die Feldeffekttransistoren die Gefahr einer Zerstörung. Um eine kapazitive Belastung zu vermeiden, wird deshalb die Art der Lastimpedanz für die Feldeffekttransistoren ermittelt. Dies erfolgt dadurch, daß man vom Ausgang des Treibers 15 die Spannung U_{T} abnimmt und in einem Phasenkomparator 14 mit der dem Lampenstrom entsprechenden Spannung U_{IL} vergleicht. Die Rückflanke der Spannung U_{T}, die eine Rechteckspannung ist, definiert dabei den Vergleichszeitpunkt tᵥ. Wenn die Belastung für die Feldeffekttransistoren induktiv wird, so verschiebt sich die Spannung U_{IL}, die etwa aus Sinushalbwellen besteht, in Figur 2 nach rechts, da im induktiven Fall der Strom der Spannung nacheilt. Im kapazitiven Falle ist das umgekehrt. Das Ausgangssignal des Phasenkomparators 14 wird der Steuereinheit 10 zugeführt. Wenn sich die Belastung der Feldeffekttransistoren dem kapazitiven Fall nähert, so bewirkt die Steuereinheit 10 eine Erhöhung der dem Wechselrichter zugeführten Frequenz mit der Folge, daß die Belastung wieder induktiver wird.

Es sind zahlreiche Variationen des vorstehend beschriebenen Vorschaltgerätes denkbar. So ist es beispielsweise nicht erforderlich, daß alle Parameter gemessen und berücksichtigt werden. Die Parameter können ständig oder periodisch gemessen werden. Die Steuereinheit muß nicht von einem Mikroprozessor (CPU) gebildet sein, sondern sie kann von einer Mehrzahl einzelner Steuerblöckespeicher u.dgl. gebildet sein. Die Meßzeiten, die Meßzwischenzeiten und andere Zeiten,wie beispielsweise die Vorheizzeit, können von der Zählerlogik (Flip-Flop-Kette) bestimmt werden oder durch eine separate Zeitzählschaltung. Selbstverständlich finden vorstehende Ausführungen auch Anwendung bei einem Vorschaltgerät mit mehr als einer Lampe. So können beispielsweise zwei Lampen in üblicher Tandemschaltung geschaltet sein.

## Patentansprüche

1. Vorschaltgerät für eine Entladungslampe, die parallel zum Kondensator eines Reihenresonanzkreises im Lastkreis eines Wechselrichters angeordnet ist, der mit einer Gleichspannungsquelle verbunden und von dem Frequenzgenerator gesteuert ist, dessen Frequenz durch ein Steuerteil zwischen einer nächst der Resonanzfrequenz des Resonanzkreises gelegene Betriebsfrequenz und einer über letztere liegenden Leerlauffrequenz veränderbar ist, mit einer mit der Steuereinheit verbundenen Spannungsmeßeinheit, welche die Spannung über der Lampe mißt, und ein dieser Spannung entsprechendes Meßsignal erzeugt, und einem Komparator,
**dadurch gekennzeichnet,**
daß das der Lampenspannung entsprechende Meßsignal (U_{L}) dem Komparator (12) zugeführt ist, der dieses (U_{L}) mit einem einem Kurzschluß über der Lampe entsprechenden gespeichesten Referenzsignal (U_{K}) vergleicht und das Vergleichsergebnis der Steuereinheit (10) meldet und daß die Steuereinheit (10) den Frequenzgenerator (6,7,8,9,15,16) oder den Wechselrichter (C) abschaltet, wenn der Signalvergleich ergibt, daß die Lampenspannung die Kurzschlußspannung nicht innerhalb eines bestimmten Zeitraumes überschreitet.

2. Vorschaltgerät für eine Entladungslampe, die parallel zum Kondensator eines Reihenresonanzkreises im Lastkreis eines Wechselrichters angeordnet ist, der mit einer Gleichspannungsquelle verbunden und von dem Frequenzgenerator gesteuert ist, dessen Frequenz durch ein Steuerteil zwischen einer nächst der Resonanzfrequenz des Resonanzkreises gelegene Betriebsfrequenz und einer über letztere liegenden Leerlauffrequenz veränderbar ist, mit einer mit der Steuereinheit verbundenen Spannungsmeßeinheit, welche die Lampenspannung mißt und ein dieser entsprechendes Signal erzeugt, und mit einem Regler,
**dadurch gekennzeichnet,**
daß das der Lampenspannung entsprechende Maßsignal (U_{L}) dem Regler (12) zugeführt wird, der dieses (U_{L}) mit einem einer Vorheizspannung entsprechenden gespeichesten Referenzsignal (U_{H}) vergleicht und das Vergleichsergebnis der Steuereinheit (10) meldet, daß die Steuereinheit (10) die Frequenz des Frequenzgenerators (6,7,8,9,15,16) in die Nähe der Leerlauffrequenz setzt und dann so regelt, daß die Lampenspannung eine bestimmte Vorheizzeit lang gleich der Vorheizspannung gehalten wird, und daß die Steuereinheit (10) nach Ablauf der Vorheizzeit die Frequenz des Frequenzgenerators (6,7,8,9,15,16) so regelt, daß sie in Richtung auf die Betriebsfrequenz abgesenkt wird.

3. Vorschaltgerät für eine Entladungslampe, die parallel zum Kondensator eines Reihenresonanzkreises im Lastkreis eines Wechselrichters angeordnet ist, der mit einer Gleichspannungsquelle verbunden und von dem Frequenzgenerator gesteuert ist, dessen Frequenz durch ein Steuerteil zwischen einer nächst der Resonanzfrequenz des Resonanzkreises gelegene Betriebsfrequenz und einer über letztere liegenden Leerlauffrequenz veränderbar ist, und mit einer mit der Steuereinheit verbundenen Spannungsmeßeinheit, welche die Lampenspannung mißt, und ein dieser entsprechendes Signal erzeugt,
**dadurch gekennzeichnet,**
daß das der Lampenspannung entsprechende Signal (U_{L}) in einem Komparator (12) mit einem der Lampenzündspannung entsprechenden Referenzsignal (U_{Z}) verglichen und das Vergleichsergebnis der Steuereinheit (10) zugeführt wird, daß die Steuereinheit (10) die Frequenz des Frequenzgenerators (6,7,8,9,15,16) in Abhängigkeit von dem Vergleichsergebnis des Komparators (12) in einem geschlossenen Regelkreis so regelt, daß die Lampenspannung die Referenzspannung eine bestimmte Zündzeit lang nicht überschreitet, und daß die Steuereinheit (10) nach Ablauf der Zündzeit die Frequenz des Frequenzgenerators (6,7,8,9,15,16) in Richtung auf die Leerlauffrequenz erhöht, wenn die Lampenspannung nicht während der Zündzeit als Folge einer Zündung stark abgesunken ist.

4. Vorschaltgerät nach Anspruch 3,
**dadurch gekennzeichnet,**
daß die Steuereinheit (10) die Frequenz des Frequenzgenerators (6,7,8,9,15,16) wieder in Richtung auf die Betriebsfrequenz absenkt, daß die Steuereinheit (10) die Zündversuche eine bestimmte festgelegte Anzahl mal wiederholt, wenn zwischenzeitlich keine Zündung erfolgt, und daß die Steuereinheit (10) die Frequenz des Frequenzgenerators (6,7,8,9,15,16) bleibend auf die Leerlauffrequenz setzt, wenn nach der bestimmten festen Anzahl von Zündversuchen keine Zündung erfolgt ist.

5. Vorschaltgerät für eine Entladungslampe, die parallel zum Kondensator eines Reihenresonanzkreises im Lastkreis eines Wechselrichters angeordnet ist, der mit einer Gleichspannungsquelle verbunden und von einem Frequenzgenerator gesteuert ist, dessen Frequenz durch ein Steuerteil zwischen einer nächst der Resonanzfrequenz des Reihenresonanzkreises gelegene Betriebsfrequenz und einer über letzterer liegenden Leerlauffrequenz veränderbar ist,
**dadurch gekennzeichnet,**
daß die von der Gleichspannungsquelle (B) erzeugte Gleichspannung einer Spannungsmeßeinheit (M) zugeführt wird, welche ein dieser Gleichspannung entsprechendes Signal (U_{G}) erzeugt und einem Multiplizierer (5) zuführt, daß der der Gleichspannungsquelle (B) entnommene Gleichstrom einer Strommeßeinheit (K) zugeführt wird, welche ein dem entnommenen Strom entsprechendes Signal (U_{IG}) erzeugt, das ebenfalls dem Multiplizierer (5) zugeführt wird, daß eine von dem Multiplizierer (5) erzeugte der Gleichstromleistung entsprechendes Signal (U_{PG}) einem Regler (4) zugeführt wird, der das letztgenannte Signal mit einem einer Sollwert-Bezugsspannung entsprechenden Signal (U_{PS}) vergleicht, daß das Vergleichsergebnis der Steuereinheit (10) zugeführt wird und daß die Steuereinheit (10) die Frequenz des Frequenzgenerators (6,7,8,9,15,16) so regelt, daß die der Gleichspannungsquelle (B) entnommene Gleichstromleistung konstant gehalten wird.

6. Vorschaltgerät für eine Entladungslampe, die parallel zum Kondensator eines Reihenresonanzkreises im Lastkreis eines mit Feldeffekttransistoren arbeitenden Wechselrichters angeordnet ist, der mit einer Gleichspannungsquelle verbunden und von einem Frequenzgenerator gesteuert ist, dessen Frequenz durch ein Steuerteil zwischen einer nächst der Resonanzfrequenz des Reihenresonanzkreises gelegenen Betriebsfrequenz und einer über letzterer liegenden Leerlauffrequenz veränderbar ist,
**dadurch gekennzeichnet,**
daß der Impedanz-Phasenwinkel des Lastkreises (E) für den Wechselrichter (C) ermittelt wird, daß in einer Meßeinheit (14) ein diesem Phasenwinkel entsprechende Signal erzeugt und der Steuereinheit (10) zugeführt wird und daß die Steuereinheit (10) die Frequenz des Frequenzgenerators (6,7,8,9,15,16) so regelt, daß die von dem Lastkreis (E) gebildete Last für den Wechselrichter (C) nicht kapazitiv wird.

7. Vorschaltgerät nach Anspruch 6,
**dadurch gekennzeichnet,**
daß in einer Strommeßeinheit (G) ein dem Strom der Lampe (L) entsprechendes Signal (U_{IL}) erzeugt und einem Phasenkomparator (14) zugeführt wird, daß dem Phasenkomparator ferner ein der Steuerspannung für den Wechselrichter (C) entsprechendes Vergleichssignal (U_{T}) zugeführt wird, und daß das Vergleichsergebnis des Phasenkomparators (14) der Steuereinheit (10) zugeführt wird.

8. Vorschaltgerät, **gekennzeichnet durch** die Kombination von mindestens zwei oder mehreren der vorstehenden Ansprüche.

## Claims

1. Ballast for a discharge lamp which is arranged parallel to the capacitor of a series resonance circuit in the load circuit of an inverter, which is connected to a d.c. voltage source and is controlled by the frequency generator, the frequency of which can be altered by a control part between an operating frequency lying near to the resonance frequency of the resonance circuit and an idling frequency lying above the operating frequency, with a voltage measuring unit connected to the control unit, the voltage measuring unit measuring the voltage across the lamp and generating a measuring signal corresponding to this voltage, and a comparator,
characterized in that
the measuring signal (U_{L}) corresponding to the lamp voltage is supplied to the comparator (12) which compares this (U_{L}) with a stored reference signal (U_{K}) corresponding to a short circuit across the lamp and signals the comparison result to the control unit (10) and in that the control unit (10) switches off the frequency generator (6, 7, 8, 9, 15, 16) or the inverter (C) if the signal comparison gives the result that the lamp voltage does not exceed the short-circuit voltage within a certain period.

2. Ballast for a discharge lamp which is arranged parallel to the capacitor of a series resonance circuit in the load circuit of an inverter, which is connected to a d.c. voltage source and is controlled by the frequency generator, the frequency of which can be altered by a control part between an operating frequency lying near to the resonance frequency of the resonance circuit and an idling frequency lying above the operating frequency, with a voltage measuring unit connected to the control unit, the voltage measuring unit measuring the lamp voltage and generating a signal corresponding thereto, and with a regulator,
characterized in that
the measuring signal (U_{L}) corresponding to the lamp voltage is supplied to the regulator (12) which compares this (U_{L}) with a stored reference signal (U_{H}) corresponding to a preheating voltage and signals the comparison result to the control unit (10), in that the control unit (10) sets the frequency of the frequency generator (6, 7, 8, 9, 15, 16) in the vicinity of the idling frequency and then regulates it such that the lamp voltage is held equal to the preheating voltage for a certain preheating period, and in that the control unit (10), after the expiration of the preheating period, regulates the frequency of the frequency generator (6, 7, 8, 9, 15, 16) such that it is lowered in the direction of the operating frequency.

3. Ballast for a discharge lamp which is arranged parallel to the capacitor of a series resonance circuit in the load circuit of an inverter, which is connected to a d.c. voltage source and is controlled by the frequency generator, the frequency of which can be altered by a control part between an operating frequency lying near to the resonance frequency of the resonance circuit and an idling frequency lying above the operating frequency, and with a voltage measuring unit connected to the control unit, the voltage measuring unit measuring the lamp voltage and generating a signal corresponding thereto,
characterized in that
the signal (U_{L}) corresponding to the lamp voltage is compared in a comparator (12) with a reference signal (U_{Z}) corresponding to the lamp ignition voltage and the comparison result is supplied to the control unit (10), in that the control unit (10) regulates the frequency of the frequency generator (6, 7, 8, 9, 15, 16) in dependence upon the comparison result of the comparator (12) in a closed regulating circuit in such a way that the lamp voltage does not exceed the reference voltage for a certain ignition period and in that the control unit (10), after the expiration of the ignition period, increases the frequency of the frequency generator (6, 7, 8, 9, 15, 16) in the direction of the idling frequency if the lamp voltage has not greatly lowered during the ignition period as a consequence of an ignition.

4. Ballast according to claim 3, characterized in that the control unit (10) again lowers the frequency of the frequency generator (6, 7, 8, 9, 15, 16) in the direction of the operating frequency, in that the control unit (10) repeats the ignition attempts for a certain fixed number of times if in the meantime no ignition takes place, and in that the control unit (10) sets the frequency of the frequency generator (6, 7, 8, 9, 15, 16) to stay at the idling frequency if, after the certain fixed number of ignition attempts, no ignition has taken place.

5. Ballast for a discharge lamp which is arranged parallel to the capacitor of a series resonance circuit in the load circuit of an inverter, which is connected to a d.c. voltage source and is controlled by a frequency generator, the frequency of which can be altered by a control part between an operating frequency lying near to the resonance frequency of the series resonance circuit and an idling frequency lying above the operating frequency,
characterized in that
the d.c. voltage generated by the d.c. voltage source (B) is supplied to a voltage measuring unit (M) which generates a signal (U_{G}) corresponding to this d.c. voltage and supplies it to a multiplier (5), in that the direct current taken from the d.c. voltage source (B) is supplied to a current measuring unit (K) which generates a signal (U_{IG}) corresponding to the current taken, which signal is likewise supplied to the multiplier (5), in that a signal (U_{PG}) generated by the multiplier (5) and corresponding to the d.c. power is supplied to a regulator (4), which compares the latter signal with a signal (U_{PS}) corresponding to a desired-value reference voltage, in that the comparison result is supplied to the control unit (10) and in that the control unit (10) regulates the frequency of the frequency generator (6, 7, 8, 9, 15, 16) such that the d.c. power taken from the d.c. voltage source (B) is kept constant.

6. Ballast for a discharge lamp which is arranged parallel to the capacitor of a series resonance circuit in the load circuit of an inverter operating with field-effect transistors, the inverter being connected to a d.c. voltage source and being controlled by a frequency generator, the frequency of which can be altered by a control part between an operating frequency lying near to the resonance frequency of the series resonance circuit and an idling frequency lying above the operating frequency, characterized in that the impedance phase angle of the load circuit (E) for the inverter (C) is determined, in that in a measuring unit (14) a signal corresponding to this phase angle is generated and supplied to the control unit (10) and in that the control unit (10) regulates the frequency of the frequency generator (6, 7, 8, 9, 15, 16) such that the load formed by the load circuit (E) for the inverter (C) does not become capacitive.

7. Ballast according to claim 6, characterized in that in a current measuring unit (G) a signal (U_{IL}) corresponding to the current of the lamp (L) is generated and supplied to a phase comparator (14), in that, moreover, a comparison signal (U_{T}) corresponding to the control voltage for the inverter (C) is supplied to the phase comparator, and in that the comparison result of the phase comparator (14) is supplied to the control unit (10).

8. Ballast, characterized by the combination of at least two or more of the above claims.

## Revendications

1. Ballast pour une lampe à décharge disposée, en parallèle avec le condensateur d'un circuit résonnant série, dans le circuit de charge d'un onduleur qui est relié à une source de tension continue et est commandé par un générateur de fréquence dont la fréquence est variable par une partie de commande entre une fréquence de service proche de la fréquence de résonance du circuit résonnant et une fréquence de marche à vide située au-dessus de cette fréquence de service, le ballast comprenant une unité de mesure de tension qui est reliée à l'unité de commande, mesure la tension sur la lampe et produit un signal de mesure correspondant à cette tension, et un comparateur, **caractérisé** par le fait que le signal de mesure (U_{L}) correspondant à la tension de la lampe est amené au comparateur (12) qui compare ce signal (U_{L}) à un signal de référence (U_{K}) mémorisé, correspondant à un court-circuit sur la lampe et transmet le résultat de la comparaison à l'unité de commande (10) et que l'unité de commande (10) coupe le générateur de fréquence (6, 7, 8, 9, 15, 16) ou l'onduleur (C) lorsque la comparaison des signaux indique que la tension de la lampe ne dépasse pas la tension de court-circuit en l'espace d'une durée déterminée.

2. Ballast pour une lampe à décharge disposée, en parallèle avec le condensateur d'un circuit résonnant série, dans le circuit de charge d'un onduleur qui est relié à une source de tension continue et est commandé par un générateur de fréquence dont la fréquence est variable par une partie de commande entre une fréquence de service proche de la fréquence de résonance du circuit résonnant et une fréquence de marche à vide située au-dessus de cette fréquence de service, le ballast comprenant une unité de mesure de tension qui est reliée à l'unité de commande, mesure la tension sur la lampe et produit un signal de mesure correspondant à cette tension, et un régulateur, **caractérisé** par le fait que le signal de mesure (U_{L}) correspondant à la tension de la lampe est amené au régulateur (12) qui compare ce signal de mesure (U_{L}) à un signal de référence (U_{H}) mémorisé, correspondant à une tension de préchauffage et signale le résultat de la comparaison à l'unité de commande (10), que l'unité de commande (10) établit la fréquence du générateur de fréquence (6, 7, 8, 9, 15, 16) au voisinage de la fréquence de marche à vide et la régule ensuite de manière que la tension de la lampe soit maintenue égale à la tension de préchauffage pendant une durée de préchauffage déterminée, et qu'après écoulement de la durée de préchauffage, l'unité de commande (10) régule la fréquence du générateur de fréquence (6, 7, 8, 9, 15, 16) de manière qu'elle soit abaissée en direction de la fréquence de service.

3. Ballast pour une lampe à décharge disposée, en parallèle avec le condensateur d'un circuit résonnant série, dans le circuit de charge d'un onduleur qui est rélié à une source de tension continue et est commandé par un générateur de fréquence dont la fréquence est variable par une partie de commande entre une fréquence de service proche de la fréquence de résonance du circuit résonnant et une fréquence de marche à vide située au-dessus de cette fréquence de service, le ballast comprenant une unité de mesure de tension qui est reliée à l'unité de commande, mesure la tension sur la lampe et produit un signal de mesure correspondant à cette tension, **caractérisé** par le fait que le sigal (U_{L}) correspondant à la tension de la lampe est comparé, dans un comparateur (12), à un signal de référence (U_{Z}) correspondant à la tension d'allumage de la lampe et le résultat de la comparaison est amené à l'unité de commande (10), que l'unité de commande (10) régule la fréquence du générateur de fréfréquence (6, 7, 8, 9, 15, 16 ) en fonction du résultat de la comparaison du comparateur (12) dans un circuit de régulation fermé de manière que la tension de la lampe ne dépasse pas la tension de référence pendant une durée d'allumage déterminée, et qu'après l'expiration de la durée d'allumge, l'unité de commande (10) augmente la fréquence du générateur de fréquence (6, 7, 8, 9, 15, 16) en direction de la fréquence de marche à vide si la tension de la lampe n'a pas subi une baisse importante pendant la durée d'allumage, suite à un allumage.

4. Ballast suivant la revendication 3, **caractérisé** par le que l'unité de commande (10) fait baisser de nouveau la fréquence du générateur de fréquence (6, 7, 8, 9, 15, 16) en direction de la fréquence de service, que l'unité de commamde (10) répète les tentatives d'allumage pendant un nombre fixe déterminé de fois si aucun allumage n'a lieu entre-temps, et que l'unité de commande (10) établit la fréquence du générateur de fréquence (6, 7, 8, 9, 15, 16) de façon permanente à la fréquence de marche à vide lorsque aucun allumage n'a eu lieu après ledit nombre fixe déterminé de tentatives d'allumage.

5. Ballast pour une lampe à décharge qui est disposée, en parallèle avec le condensateur d'un circuit résonnant série, dans le circuit de charge d'un onduleur qui est relié à une source de tension continue et est commandé par un générateur de fréquence dont la fréquence est variable par une partie de commande entre une fréquence de service proche de la fréquence de résonance du circuit résonnant et une fréquence de marche à vide située au-dessus de cette fréquence de service, **caractérisé** par le fait que la tension continue produite par la source de tension continue (B) est amenée à une unité de mesure de tension (M) qui produit un signal (U_{G}) correspondant à cette tension continue et l'amène à un multiplicateur (5), que le courant continu prélevé dans la source de tension continue (B) est amené à une unité de mesure de courant (K) produisant un signal (U_{IG}) qui correspond au courant prélevé et qui est également amené au multiplicateur (5), qu'un signal (U_{PG}) correspondant à la puissance de de courant continu et produit par le multiplicateur (5) est amené à un régulateur (4) qui compare ce dernier signal à un signal (U_{PS}) correspondant à une tension de référence de valeur de consigne, que le résultat de la comparaison est amené à l'unité de commande (10) et que l'unité de commande (10) régule la fréquence du générateur de fréquence (6, 7, 8, 9, 15, 16) de manière que la puissance du courant continu prélevée dans la source de tension continue (B) soit maintenue constante.

6. Ballast pour une lampe à décharge disposée, en parallèle avec le condensateur d'un circuit résonnant série, dans le circuit de charge d'un onduleur qui est relié à une source de tension continue et est commandé par un générateur de fréquence dont la fréquence est variable par une partie de commande entre une fréquence de service proche de la fréquence de résonance du circuit résonnant et une fréquence de marche à vide située au-dessus de cette fréquence de service, **caractérisé** par le fait que l'angle de phase d'impédance du circuit de charge (E) pour l'onduleur (C) est déterminé, qu'un signal correspondant à cet angle de phase est produit dans une unité de mesure (14) et amené à l'unité de commande (10), et que l'unité de commande (10) régule la fréquence du générateur de fréquence (6, 7, 8, 9, 15, 16) de manière que la charge formée par le circuit de charge (E) ne devienne pas capacitive pour l'onduleur (C).

7. Ballast suivant la revendication 6, **caractérisé** par le fait qu'un signal (U_{IL}) correspondant au courant de la lampe (L) est produit dans une unité de mesure de courant (G) et amené à un comparateur de phase (14), que le comparateur de phase reçoit en outre un signal de comparaison (U_{T}) correspondant à la tension de commande pour l'onduleur (C) et que le résultat de la comparaison du comparateur de phase (14) est amené à l'unité de commande (10).

8. Ballast **caractérisé** par la combinaison d'au moins deux ou plusieurs des revendications précédentes.
